**Europäisches Patentamt**

**European Patent Office**

**Office européen des brevets**

(19)

(11) Publication number: **0 124 345**
A2

## (12) EUROPEAN PATENT APPLICATION

(21) Application number: **84302786.3**

(22) Date of filing: **25.04.84**

(51) Int. Cl.³: **B 65 G 53/46**

(30) Priority: **29.04.83 GB 8311860**

(43) Date of publication of application: **07.11.84**
**Bulletin 84/45**

(84) Designated Contracting States: **DE FR GB IT NL**

(71) Applicant: **TURRET ENGINEERING LIMITED, Pindar Road, Hoddesdon, Herts. EN11 0BZ (GB)**

(72) Inventor: **Markham, Anthony Stephen, 5 Stone Font Grove, Cantley Manor Doncaster DN4 6UQ (GB)**

(74) Representative: **Ford, Michael Frederick et al, MEWBURN ELLIS & CO. 2/3 Cursitor Street, London EC4A 1BQ (GB)**

(54) **Material spraying or conveying.**

(57) Apparatus for spraying or conveying powdered or granular materials, the apparatus including a hopper (10); a part-cylindrical chamber (38) beneath the hopper; a cylindrical rotor (30) located in said chamber, said rotor having a series of channels (62) extending longitudinally of its periphery; means for rotating said rotor at a controlled speed; a material inlet slot (40) opening from the hopper (10) to the part-cylindrical chamber (38); and fluid inlet and outlet ducts (22 and 60) extending into the opposite ends of the chamber and at points diametrically remote from the material inlet slot (40).

- 1 -

"Material spraying or conveying"

The invention relates to apparatus for spraying or conveying granular or powdered materials.

Various means have previously been proposed for the spraying or conveying of granular or powdered materials. For example, in one prior form of such apparatus there has been provided a pressure vessel from which the granular or powdered material has been allowed to flow at an adjustable rate through a valve into a compressed air duct to be entrained by a blast of air passing through said duct. Such an apparatus has worked quite well but one disadvantage is that since the vessel containing the material is a pressure vessel it needs to be of adequate thickness to withstand the applied pressure. Consequently, it is of considerable weight even when empty and for this reason is not readily portable. Furthermore, the problem of re-filling the pressure vessel with the material from time to time means that unless it is to be opened to atmospheric pressure at such times (so that the apparatus is thus not capable of continuous operation) a further pressure vessel must be mounted vertically above the first mentioned pressure vessel with valve means between them and means whereby material can be poured into the uppermost pressure vessel with said valve means closed; the upper pressure vessel can then be closed and re-pressurised, and the valve means can subsequently be opened to allow the material in the upper pressure vessel to fall into the lower pressure vessel by gravity. The apparatus is then capable of continuous operation but of course the need for two pressure vessels makes the apparatus excessively heavy and unwieldy and, during continuous operation, it requires replenishment with material at frequest intervals. The present invention aims to alleviate at least some of the problems referred to above.

The invention as claimed is intended to provide a remedy. It solves the problem of how to design apparatus for spraying or conveying granular or powdered materials in a particularly simple fashion.

The advantages offered by the invention are mainly that it provides a very simple means whereby the spraying or conveying of the granular or powdered materials can be continuous and need not be interrupted for the re-filling of the hopper. The vessel containing a supply of the granular or powdered material does not need to be a pressure vessel. Consequently, the apparatus is of relatively low weight and is very safe in use.

In order that the invention may be fully understood and readily carried into effect, the same will now be described, by way of example only, with reference to the accompanying drawings, of which:-

Figure 1 is a diagrammatic side view of apparatus embodying the invention,

Figure 2 is a diagrammatic sectional view on the line 2-2 in Figure 1,

Figure 3 is a perspective view of a rotor element forming a part of the apparatus, and

Figure 4 is a view similar to Figure 1 and illustrating a possible modification which will be referred to.

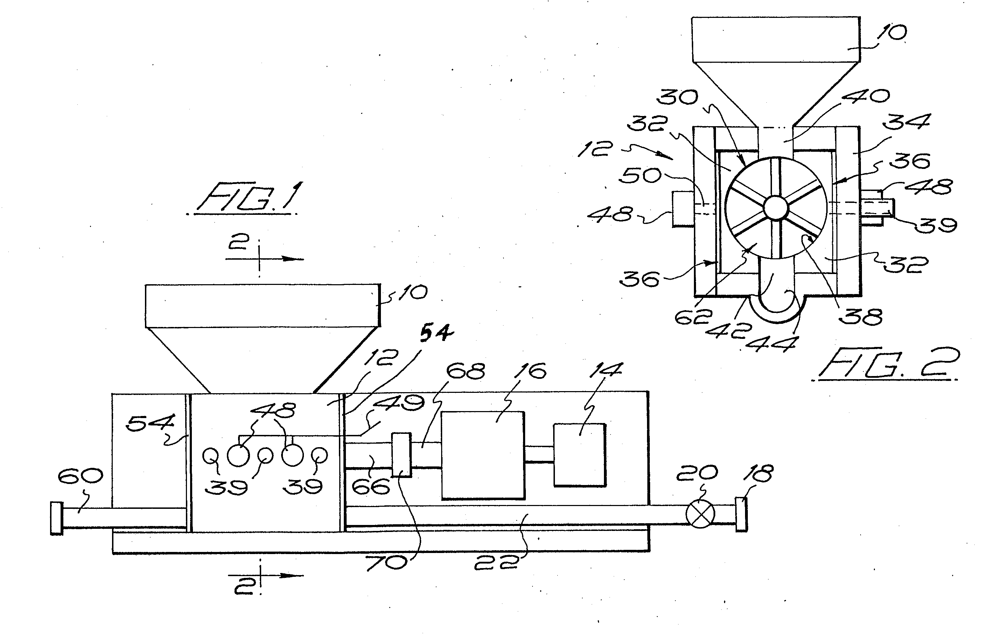

Referring now to Figure 1 of the drawings, the apparatus there illustrated includes a hopper 10 for a quantity of granular or powdered material; mechanism generally indicated 12 beneath the hopper and into which the material can fall by gravity; drive means for the mechanism 12, said drive means including a motor 14 and a gearbox 16; a compressed air inlet pipe 18 with a shut-off valve 20, an air line 22 leading to the mechanism 12; a delivery line 60 leading from the mechanism.

- 4 -

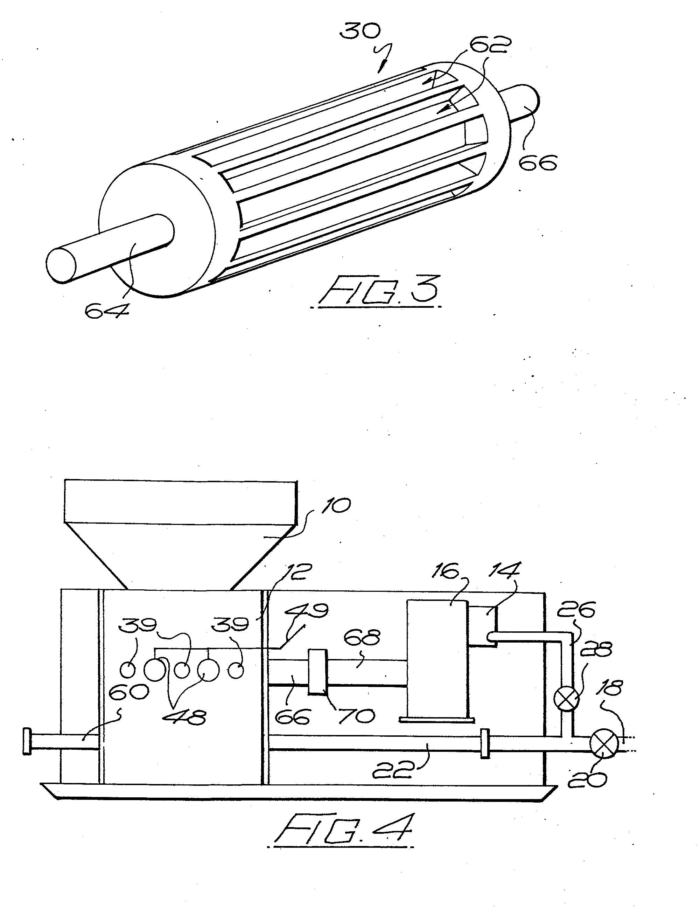

Referring now to Figures 2 and 3, the mechanism 12 includes a generally cylindrical rotor 30 rotatably mounted between a pair of rubber sealing elements 32, the latter being contained within a main casing 34. As shown, the sealing elements have the shape of rectangular blocks with respective part circular grooves and are backed by metal plates 36. A space between the pair of resilient sealing elements defines a part-cylindrical chamber 38 within which the rotor is located, and a slot 40 which extends longitudinally of the upper portions of said elements constitutes a material inlet slot between the hopper and the chamber. A slot 42 which extends longitudinally of the lower portions of the sealing elements overlies a flow passage 44.

The main casing 34 of the mechanism 12 is provided on its opposite sides with pairs of hydraulic rams 48 the movable pistons 50 of which extend through holes in the opposite sides of the casing to act with an adjustable force against the metal backing plates 36 of the respective rubber sealing elements. The hydraulic rams are connected to a common source of hydraulic pressure (not shown) by conduits 49. In addition, on one side of the main casing 34 there are provided a series of exhaust ports 39 which open from the part-cylindrical chamber 38.

- 5 -

End plates 54 of the main casing are provided in their lower regions, that is to say opposite the flow passage 44, with ports which communicate with the air line 22 and with the delivery line 60 respectively.

As shown in Figure 3, the rotor 30 is provided with a plurality of longitudinally extending channels 62 in its otherwise cylinderical surface, each channel stopping short of the opposite ends of the rotor. The opposite ends of the rotor are provided with stub shafts 64 and 66 which can extend rotatably through bearings (not shown) in the respective end plates 54 of the main casing. The stub shaft 66 of the rotor is shown in Figure 1 to be drivably connected to a drive shaft 68 of the gearbox by a coupling 70.

The arrangement is such that as the rotor is driven at a controlled rate (in anti-clockwise direction as viewed in Figure 2) the granular or powdered material in the hopper is able to fall through the slot 40 between the upper portions of the sealing elements into the channels 62 of the rotor to be carried around to where said channels communicate in turn with the flow passage 44 so that the material in said channels is entrained by the compressed air flowing through said flow passage. As the channels then communicate in turn with the exhaust ports 39, the residual pressure of air in said channels is able to escape to atmosphere before the channels move into position, in turn, beneath the slot 40 where they are again replenished with material from the hopper.

It is thought that the apparatus described above will be a significant advance on previously known apparatus, notably because the hopper can be made relatively large so that it will not require replenishment at very frequent intervals. Nevertheless, it will be understood that if the hopper is replenished when required the apparatus is capable of continuous operation. Since the hopper does not need to be pressurised it can be of relatively light construction. Consequently, the weight of the apparatus can be kept relatively low so that it can be moved from place to place very easily.

It will be understood that the rotor may be driven by any convenient means. For example, the motor 14 could be an electric motor or it could be a petrol or diesel engine, or it could be a compressed air motor. In Figure 4 there is illustrated a possible modification of the apparatus previously described, the motor 14 being in this case a compressed air motor. As shown, the compressed air motor is connected to an air line 26 through which air under pressure is taken from the air inlet pipe 18 via the shut-off valve 20 and a further valve 28.

Various other modifications may be made and it will be understood that the required rate of rotation of the rotor can be determined by trial and experiment; it may be found that the optimum rate of rotation is dependent upon the type of material which is to be entrained in the fluid stream.

- 8 -

CLAIMS:

1.    Apparatus for spraying or conveying granular or powdered material, the apparatus including a hopper (10) for a quantity of the granular or powdered material and a part-cylindrical chamber (38) beneath the hopper, the axis of the chamber extending horizontally or substantially horizontally, there being a material inlet slot (40) between the hopper and chamber and extending longitudinally of the latter, characterised in that there is provided a cylindrical or generally cylindrical rotor (30) located within the part-cylindrical chamber, the rotor being provided with a plurality of longitudinally extending channels (62) in its cylindrical surface, each channel (62) stopping short of the opposite ends of the rotor; means for rotating the rotor (30) at a controlled rate; and respective fluid inlet and outlet ducts (22 and 60) extending into the opposite ends of the chamber and at points remote from the material inlet slot (40), the arrangement being such that in operation, as the rotor (30) is driven at a controlled rate, the granular  or powdered material is able to fall into the channels (62) in the otherwise cylindrical or generally cylindrical surface of the rotor to be carried around to where said channels communicate in turn at their opposite ends with the respective fluid inlet and outlet ducts (22 and 60) so that the material in said channels is entrained by the fluid flowing into and from said channels through the respective ducts.

2.    Apparatus according to claim 1, in which at least one exhaust port (39) communicates with the part-cylindrical chamber (38), the arrangement being such that after the channels (62) of the rotor (30) have communicated in turn with the flow passage (44), for the material in said channels to be entrained by the fluid flowing through the flow passage, the channels then communicate in turn with the at least one exhaust port (39) so that the residual pressure of air in said channels is able to escape to atmosphere before the channels move into position, in turn, beneath the material inlet slot where they are again replenished with material from the hopper.

3.    Apparatus according to either one of the preceding claims, in which the part-cylindrical chamber (38) beneath the hopper (10) is defined by a space between a pair of sealing elements (32, 32) having the shape of rectangular blocks with respective part circular grooves.

4.    Apparatus according to claim 3, in which the pair of sealing elements (32, 32) are made of a resilient material and are backed by metal plates (36, 36),at least one hydraulic ram (48)being arranged to act against each metal plate (36) to urge the resilient sealing elements (32, 32) into sealing engagement with the rotor (30).

5. Apparatus according to any one of the preceding claims, in which the means for rotating the rotor (30) at a controlled rate are constituted by a compressed fluid driven motor (14).

6. Apparatus according to claim 5, in which the compressed fluid for driving the compressed fluid driven motor (14) is tapped from a compressed fluid pipe communicating with the fluid inlet duct extending into the chamber.

FIG.1

FIG.2

_FIG.3_

_FIG.4_